(19) Europäisches Patentamt
European Patent Office
Office européen des brevets

(11) **EP 3 128 212 B1**

(12) **EUROPEAN PATENT SPECIFICATION**

(45) Date of publication and mention
of the grant of the patent:
**06.11.2019 Bulletin 2019/45**

(51) Int Cl.:
*F16K 5/06* (2006.01)    *G01F 1/44* (2006.01)
*G01F 15/00* (2006.01)

(21) Application number: **16182119.4**

(22) Date of filing: **01.08.2016**

(54) **INSTRUMENT FOR MEASURING THE FLOWRATE OF A FLUID**

INSTRUMENT ZUR MESSUNG DER STRÖMUNGSGESCHWINDIGKEIT EINES FLUIDS

INSTRUMENT PERMETTANT DE MESURER LE DÉBIT D'UN FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2015 IT UB20152823**

(43) Date of publication of application:
**08.02.2017 Bulletin 2017/06**

(73) Proprietor: **WATTS INDUSTRIES ITALIA S.r.l.**
**38121 Frazione Gardolo (TN) (IT)**

(72) Inventor: **CUCCINIELLO, Alfredo Marco**
**38121 Frazione Gardolo - Trento (IT)**

(74) Representative: **Raimondi, Margherita et al**
**Dott. Ing. Prof. Alfredo Raimondi S.r.l.,**
**Piazzale Cadorna, 15**
**20123 Milano (IT)**

(56) References cited:
**EP-A1- 0 593 164**     **EP-A2- 1 835 209**
**US-A1- 2002 101 355**

EP 3 128 212 B1

## Description

The present invention relates to an instrument for measuring the flowrate of a fluid flowing inside a pipe.

It is known in the sector of hydro-thermo sanitary installations for both heating and cooling applications that continuous attempts are being made to improve said installations in terms of their efficiency and comfort for the user.

It is also known that possibilities of obtaining such an improvement are dependent on the possibility of carrying out measurements of the values of parameters indicative of the real operation of the installation, the most important measurement parameters including: the temperature, pressure and flowrate of the fluid.

As regards in particular the flowrate measurement instruments of various types are known and these, although fulfilling their function, nevertheless have drawbacks which limit their possible applications since they are costly, have large dimensions and offer a poor level of precision. This in turn gives rise to head losses and in particular a low value for the maximum to minimum flowrate ratio which can be measured by the instrument (otherwise known as "rangeability" or "turndown ratio").

This means that in practice the known measurement instruments are necessarily specialized for a specific measurement range determined by the respective full scale value.

Consequently an instrument which is suitable for measuring high flowrates is not suitable for measuring low flowrates and vice versa; this results in a consequent need for an increase in the types of instruments which can be used, the storage facilities, the specific choices made during the design stage and therefore the final cost of the measurement devices.

EP 0 593 164 A1 discloses a flow meter having a conduit with a constriction in which a contoured plug is situated, the plug being axially displaceable, under a pressure difference across the constriction, against the biasing action of resilient means; the resilient means act between the plug and an abutment to thereby vary the flow cross-section of the constriction. The flow-rate measurement is effected by measurement means responsive to the force applied by the resilient means on the abutment, for providing a signal representing the flow rate through the conduit.

In order to allow meter calibration to be checked in service without disturbing any internal components of the meter, a differential pressure transducer for detecting a difference in pressure which occurs between the inside of a first chamber upstream of the constriction, and the inside of a conduit downstream of the constriction is provided.

US 2002/101355 A1 discloses a flow sensor device that has a check valve comprising a moving plate for moving in response to fluid flow through the sensor and a biasing means for biasing the plate towards the sensor inlet; in order to measure the flow rate inside the device, a sensor means is provided for sensing the movement of the moving plate and creating a signal related to its location. The moving plate is composed of a magnetizable material and the sensor means comprises a steel sensor disposed adjacent to a path traveled by the moving plate for sensing the location of the moving plate.

An example of a prior art device that uses a pressure measurement to measure flow rate through a pipe is known from EP 1 835 209, on which the preamble of claim 1 is based and which describes a tri-functional valve able to measure a differential pressure value $\Delta p$ by means of a measuring instrument connected to a Venturi tube arranged between a check valve and a shut-off valve.

In EP 1 835 209 the instrument for measuring the differential pressure is connected, using well-established technology, upstream, to the first portion of the Venturi tube which has a larger cross-section and, downstream, to the central portion of the Venturi tube which has a narrow cross-section. In this way the measuring instrument detects the value of $\Delta p$ corresponding to the variation in pressure which occurs in the movement of the fluid as it passes from the larger cross-section to a smaller cross-section of the Venturi tube. The instrument therefore measures only the value of $\Delta p$ generated by the Venturi tube alone which is proportional to the **square** flowrate $\mathbf{Q^2}$. Such a configuration, wherein $\Delta p$ value measured across the Venturi is used for indirect measurement of the flowrate, results in limited rangeability (turndown ratio) values corresponding to typical values of the Venturi tube which are close to 5:1 for the ratio

$$\frac{\Delta p\,max}{\Delta pmin}$$

between a maximum value $\Delta pmax$ and a minimum value $\Delta pmin$ which the instrument is able to measure.

This limited rangeability is decidedly inadequate, for example, in the case of typical hydro-thermo sanitary applications for which an adequate value of the ratio is 25:1.

Moreover increasing the rangeability of the measurement chain described above would result in a significant increase in the cost of the entire instrument.

It is also necessary to take into account the type and quality of the reading made by the instrument for measurement of the flowrate which may be: direct, for example by means of electronic display or by means of the indicator of a flowmeter; indirect, for example by means of an auxiliary reading instrument, such as the electronic instruments designed to read the values recorded by balancing valves; or reading performed by turbine instruments, which generate an electromagnet pulse with each revolution of the turbine driven by the fluid.

As regards particular devices for measuring the flowrate of a flow, such as flowmeters, there is the further problem arising from the fact that the display scales are typically small and difficult to read.

In addition to the above, there is also the drawback that the calibrated scale for displaying the measurement is passed through by the fluid which tends to introduce impurities inside it, resulting, within a short period of time, in dirt accumulation that makes it more or less impossible to read the flowrate measurement, with consequent errors in regulation by the user.

The technical problem which is posed, therefore, is that of providing an instrument for measuring the flowrate of a fluid flowing inside a pipe which is able to cover very wide measurement ranges embracing low to high flowrate values.

In connection with this problem it is also desirable that such an instrument should not give rise to excessive head losses in the flow so as not to reduce its efficiency and should not be subject to soiling which over time reduces the legibility of the measurement display scale.

Moreover the instrument should have small dimensions, be easy and inexpensive to produce and assemble and be able to be easily installed at any user location using normal standardized connection means.

These results are obtained according to the present invention by an instrument for measuring the flowrate of a fluid according to the features of Claim 1.

Further details may be obtained from the following description of non-limiting examples of embodiment of the subject matter of the present invention, provided with reference to the accompanying drawings, in which:

> Figure 1: shows a cross-section, along a diametral vertical plane, of the measuring instrument according to the invention during measurement of a low flowrate;
> Figure 2: shows a cross-section, similar to that of Fig. 1, with the instrument during measurement of high flowrates;
> Figure 3: shows a graph of the measurements obtained with the instrument according to the invention; and
> Figures 4a, 4b: show a second example of embodiment of the measuring instrument according to the invention.

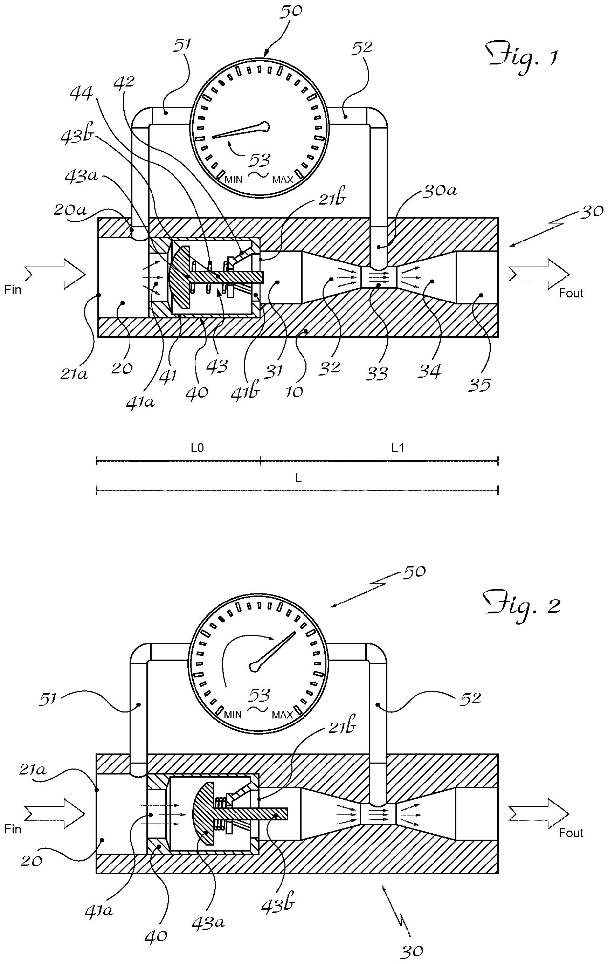

As shown in Fig. 1 and assuming solely for the sake of easier description and without a limiting meaning a longitudinal direction X-X, corresponding to the lengthwise extension of the instrument and the direction of flow, and an upstream part corresponding to the part for entry into the same of the fluid $F_{in}$ and a downstream part opposite to the preceding part and corresponding to the part for outflow of the fluid $F_{out}$, the instrument for measuring the flowrate of a fluid according to the invention substantially comprises:

- A tubular element 10 with a given overall length L divided along the longitudinal direction X-X into two portions with a respective length $L_0$ and $L_1$ arranged

in series relative to each other and comprising from upstream to downstream:

> •) a first cylindrical chamber 20 with a given inner diameter $d_{20}$ extending between an upstream opening 21a and a downstream opening 21b;
> •) a check valve 40 comprising a substantially cylindrical body 41 with an outer diameter $d_{40}$ such that it may be coaxially inserted inside the chamber 20; the cylindrical body 41 has an upstream opening 41a, communicating with the first chamber 20, and a downstream opening 41b; the valve houses internally a closing member 43 displaceable in both senses of the longitudinal direction X-X and comprising a head 43a, designed to interfere so as to close/open the upstream opening 41a of the valve, and a shank 43b integral with the head 43a.

The movement of the closing member in the longitudinal direction X-X is preferably guided by a projection 42 which is integral with the front downstream surface of the body 41 of the valve 40 and inside which the shank 43b slides.

A spring 44 is coaxially arranged between the guiding projection 42 and the head 43a of the closing member and is calibrated to provide a suitable resistance to sliding of the closing member and therefore to opening of the upstream aperture 21a.

- A second chamber 30 which, from upstream to downstream, comprises at least:

    • a second portion having a frustoconical form 32 with its greater base situated upstream,
    • a third, central, cylindrical portion 33 with a cross-section substantially corresponding to that of the smaller base of the second portion 32;
    • a fourth portion 34 with a frustoconical cross-section having its larger base situated downstream.

The following is also preferably provided:

• a first cylindrical portion 31 with a given cross-section, and/or
• a fifth portion 35 with a cylindrical cross-section for discharging the fluid $F_{out}$.

The set of portions forming the chamber 30 simulates substantially a Venturi tube, the upstream aperture of which is connected to the downstream opening 41b of the check valve and the downstream aperture of which forms the outlet for fluid $F_{out}$ from the measuring instrument. - A device for detecting a difference in pressure $\Delta p$ which occurs between the first upstream chamber 20, communicating with the check valve 40 upstream opening and the central cylindrical portion 33 of the second chamber 30.

The detection device 50 is connected by means of an upstream pipe 51 to the upstream chamber 20 and by means of a downstream pipe to the said central cylindrical portion 33 of the second chamber 30 and comprises a dial 53, of the analog type in the example shown, for indicating the pressure difference value $\Delta p$ detected.

With this arrangement of the connections for the upstream pipe 51 and downstream pipe 52, the instrument is able to detect the variation in pressure across the assembly composed of the check valve and the Venturi tube.

With this configuration the operating principle of the flowrate measuring instrument according to the invention is as follows:

- the tubular portion 10 is inserted inside the piping section (not shown) for which the flowrate of the fluid flowing inside it must be determined;
- the fluid flow $F_{in}$ is opened by means of an upstream or downstream device - not shown and not forming part of the invention - so that it enters into the first chamber 20 and then into the check valve 40 with a pressure P1 which produces a thrust on the closing member 43 which overcomes the force of the spring 44 and opens the check valve;
- once the check valve is open the fluid flows there through and, flowing out from the downstream opening 41b, enters into the second portion 30 of the instrument where it undergoes compression/expansion determined by the dimensions of the portions 32,33,34 of the Venturi tube; during these stages variations in speed and pressure with substantially zero balancing take place and, in particular, a pressure value P2 in the central cylindrical portion 33 connected to the downstream pipe 52 of the detection device 50 is determined.

The detection device 50 detects the pressure difference $\Delta p = P2-P1$ across the assembly formed by the check valve plus Venturi tube, providing an indication of its value on the dial 53.

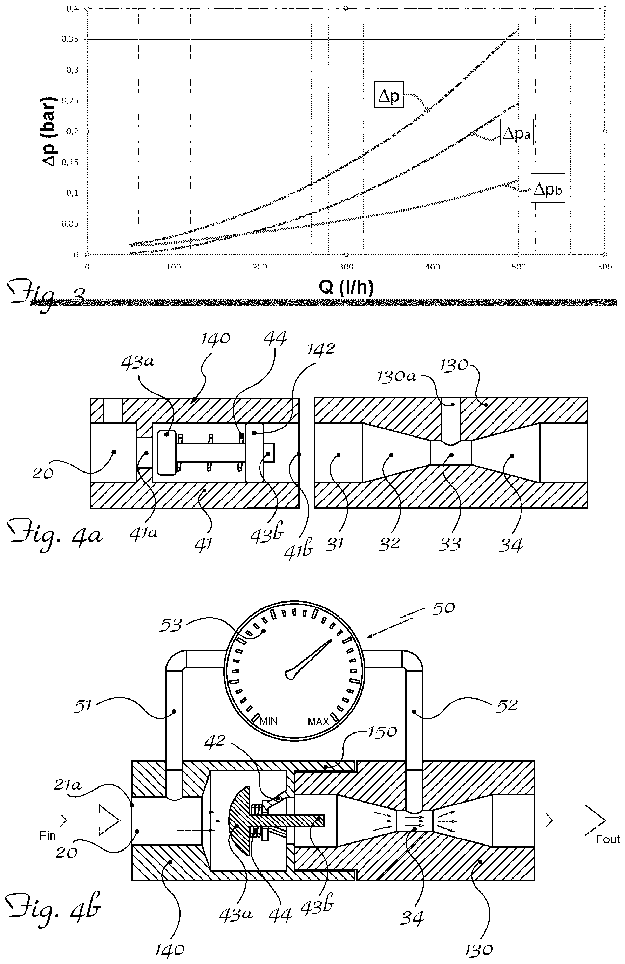

With the indication of the value $\Delta p$ it is possible in a conventional manner well-established in the technical reference sector to refer to the graph (Fig. 3) showing Flowrate Q versus Pressure Difference $\Delta p$, associated with the measuring instrument, and thereby obtain with precision the flowrate of the fluid flowing inside the piping.

The displacement of the closing member 43 varies depending on the flowrate of the fluid flowing inside the valve.

As shown in Fig. 2, any increase in the flowrate of the fluid $F_{in}$ produces a greater thrust on the closing member 43 which, overcoming the resistance of the spring 44, moves downstream, opening more the check valve 40 so as to allow the greater fluid flow $F_{in}$ to pass through; at the same time an increase of the value of $\Delta p = P2-P1$ occurs and the measurement thereof is shown on the analog dial 53. As can be seen from the graph in Fig. 3, the locus of the points for the pressure difference values is a curve $\Delta p$ always resulting from a combination of the curve $\Delta pb$, which expresses the head loss occurring across the upstream check valve 40, and the curve $\Delta pa$, which instead expresses the variation in pressure referable to the downstream portion 30 which simulates the Venturi tube; what is significant is that, despite the fact that the resultant curve $\Delta p$ represents a combination of the two values, at low flowrates the contribution to the measurement made by the Venturi tube is negligible, while at high flowrates the contribution provided by the fluid flowing through the check valve becomes negligible.

As shown in Figs. 4a,4b (in which parts corresponding to the previous embodiment maintain the same reference number) a second embodiment of the measuring instrument according to the invention is envisaged, said embodiment being in this case realized by means of a check valve 140 and a tubular portion 130 simulating the Venturi tube, said valve and tubular portion being independent of each other and, during use, coaxially connected together as shown in Fig. 4b for example by means of a male/female thread connection 150.

In detail the check valve comprises a substantially cylindrical body 41 which has an upstream opening 41a, a downstream opening 41b and a suitable outer diameter $d_{40}$.

The cylindrical body 41 has, formed inside it, an upstream chamber 20 and also contains a closing member 43 which is displaceable in both senses of the longitudinal direction X-X and comprises a head 43a, designed to interfere with and close/open the upstream opening 41a of the valve, and a shank 43b integral with the head 43a.

The movement of the closing member in the longitudinal direction X-X is preferably guided by a baffle 142 integral with the side surface of the body 41, as shown in Fig. 4a, or by means of a projection 42 - similar to that described for Fig. 1 - inside which the shank 43b slides, as shown in Fig. 4b.

A spring 44, calibrated to provide a suitable resistance to sliding of the closing member and therefore opening of the upstream aperture 41a, is coaxially arranged between the guide baffle 142 and the head 43a of the closing member.

The tubular portion 130 has at least a succession of portions 32,33,34 which are entirely similar to those of the first embodiment and which are therefore mentioned here and not further described. The instrument is in this case also completed by a display dial 53 connected by means of the respective upstream pipe 51 and downstream pipe 52 to the upstream chamber 20 of the check valve 40 and to the central portion 33 of the tubular element 130.

As a result a same measuring instrument constructed in a simple, low-cost and reliable manner is able to measure with suitable precision the flowrate of a fluid inside piping even where there exist considerable differences between low flowrates and high flowrates, thereby solving the technical problem of the prior art which requires different instruments with different full scale values in order to measure flowrates which differ greatly from each other.

Moreover, display of the measurement remains always clear and precise over time, since the dial of the detection device is not passed through by the fluid, avoiding the accumulation of dirt on the said dial.

Although described in the context of a number of embodiments and a number of preferred examples of embodiment of the invention it is understood that equivalent variants may be introduced into the constructional design of the measuring instrument which may be calibrated so that the graduated scale of the dial indicates directly - and therefore more easily for the user - the value of the flowrate measured.

In addition the following may be differently envisaged: measurement display dials, which are for example digital instead of analog; dimensions for the lengths $L, L_1, L_2$, and diameters $d_{20}, d_{40}$ of the chamber 20 and the valve 40, respectively, and for the lengths and cross-sections of the different portions of the chamber 30 simulating a Venturi tube, and/or the introduction of differential transducers for the remote transmission of the signal representing the measurement of the flowrate.

It is understood therefore that these variants may be implemented without departing from the scope of protection of the present patent as defined by the claims which follow.

**Claims**

1. Instrument for measuring the flowrate of a fluid ($F_{in}$, $F_{out}$) flowing inside a pipe from upstream to downstream along a longitudinal flow direction (X-X), comprising:

   - a check valve (40;140) and a tubular element (30;130) simulating, in use, a Venturi tube, said valve and element being coaxially connected together, respectively, from upstream to downstream in the longitudinal direction (X-X) of flow of the fluid;
   - a device (50) **arranged** for detecting a difference in pressure ($\Delta p$) which occurs between the inside of a first chamber (20) and the inside of a central cylindrical portion (33) of the tubular element (30;130), **characterized in that** said first chamber (20) is a chamber upstream of the check valve (40;140) and communicating therewith.

2. Instrument according to Claim 1, **characterized in that** said check valve (40;140) comprises a substantially cylindrical body (41;141) of suitable outer diameter provided with an upstream opening (41a), communicating with said first upstream chamber (20;120), and a downstream opening (41b), a closing member (43) being inserted inside the valve and being displaceable in both senses of the longitudinal direction (X-X) under the thrusting action of the fluid or the thrusting action of a spring (44) in the opposite direction.

3. Instrument according to Claim 1 or 2, **characterized in that** said tubular element (30;130) comprises at least:

   - a second portion having a frustoconical form (32) with its greater base situated upstream and smaller base situated downstream,
   - a third, central, cylindrical portion (33) with a cross-section substantially corresponding to that of the smaller base of the second frustoconical portion (31),
   - a fourth portion (34) with a frustoconical cross-section having its larger base situated downstream, said portions being arranged in series along the longitudinal direction (X-X).

4. Instrument according to Claim 3, **characterized in that** said tubular element (30;130) comprises:

   - a first cylindrical portion (310) with a given cross-section, arranged upstream of the said second frustoconical portion (32).

5. Instrument according to Claim 3 or 4, **characterized in that** said tubular element (30;130) comprises a fifth portion (35) with a cylindrical cross-section, arranged downstream of the said fourth frustoconical portion (34), for discharging the fluid ($F_{out}$).

6. Instrument according to any one of the preceding claims, **characterized in that** said detection device (50) is connected by means of an upstream pipe (51) to the upstream chamber (20) and by means of a downstream pipe (52) to the said central cylindrical portion (33) of the tubular element (30;130).

7. Instrument according to any one of the preceding claims, **characterized in that** said measuring device comprises a dial (53) showing the value of the difference in pressure ($\Delta p$) detected.

8. Instrument according to any one of Claims 1 to 7, **characterized in that** it comprises:

   - a tubular element (10) extending in a longitudinal direction (X-X) of flow of the fluid from upstream to downstream, having a given overall length (L) and being divided up along the longitudinal direction (X-X) into two portions (20,30) of respective length ($L_0, L_1$) arranged relative to

each other in series from upstream to downstream in the direction of flow of the fluid and respectively comprising:

    • a first chamber (20) of given internal diameter ($d_{20}$) extending in the longitudinal direction (X-X) between an upstream opening (21a) and a downstream opening (21b); the check valve (40) being coaxially inserted in the first chamber (20);
    • a second chamber (30) which from upstream to downstream comprises at least three portions (32,33,34) of varying cross-section which together are designed to simulate a Venturi tube.

**9.** Instrument according to the preceding claim, **characterized in that** said check valve (40) comprises a substantially cylindrical body (41) with an outer diameter ($d_{40}$) such that it may be coaxially inserted inside the chamber (20).


**Patentansprüche**

**1.** Vorrichtung zum Messen des Durchsatzes eines im Inneren eines Rohrs von stromaufwärts nach stromabwärts entlang einer Längs-Strömungsrichtung (X-X) strömenden Fluids, umfassend:

    ein Rückschlagventil (40; 140) und ein rohrförmiges Element (30; 130), das in Betrieb ein Venturi-Rohr simuliert, wobei das Ventil und das Element koaxial miteinander von stromaufwärts nach stromabwärts in der Längsrichtung (X-X) des Fluidstroms verbunden sind;
    eine Einrichtung (50), ausgebildet zum Nachweisen einer Druckdifferenz ($\Delta p$), die zwischen dem Inneren einer ersten Kammer (20) und im Inneren eines zentralen zylindrischen Abschnitts (33) des rohrförmigen Elements (30; 130) auftritt, **dadurch gekennzeichnet, dass** die erste Kammer (20) eine Kammer stromaufwärts bezüglich des Rückschlagventils (40; 140) ist und mit diesem kommuniziert.

**2.** Vorrichtung nach Anspruch 1, **dadurch gekennzeichnet, dass** das Rückschlagventil (40; 140) einen im wesentlichen zylindrischen Körper (41; 141) eines passenden Außendurchmessers mit einer stromaufwärtigen Öffnung (41a), die mit der ersten stromaufwärtigen Kammer (20; 120) kommuniziert, und einer stromabwärtigen Öffnung (41b) aufweist, wobei im Inneren des Ventils ein Schließelement (43) eingefügt ist, das in der Längsrichtung (X-X) in beiden Richtungen verlagerbar ist unter der Schubwirkung des Fluids oder der Schubwirkung einer Feder (44) in der entgegengesetzten Richtung.

**3.** Vorrichtung nach Anspruch 1 oder 2, **dadurch gekennzeichnet, dass** das rohrförmige Element (30; 130) mindestens aufweist:

    einen zweiten Abschnitt mit kegelstumpfförmiger Form (32), die stromaufwärts mit ihrer größeren Basis gelegen ist und stromabwärts mit ihrer kleineren Basis gelegen ist,
    einen dritten, zentralen zylindrischen Abschnitt (33) mit einem Querschnitt im wesentlichen entsprechend demjenigen der kleineren Basis des zweiten kegelstumpfförmigen Abschnitts (31),
    einen vierten Abschnitt (34) mit kegelstumpfförmigem Querschnitt, dessen größere Basis stromabwärts gelegen ist, wobei die Abschnitte in Reihe entlang der Längsrichtung (X-X) angeordnet sind.

**4.** Vorrichtung nach Anspruch 3, **dadurch gekennzeichnet, dass** das rohrförmige Element (30; 130) aufweist:
einen ersten zylindrischen Abschnitt (310) mit einem gegebenen Querschnitt, angeordnet stromaufwärtig bezüglich des zweiten kegelstumpfförmigen Abschnitts (32).

**5.** Vorrichtung nach Anspruch 3 oder 4, **dadurch gekennzeichnet, dass** das rohrförmige Element (30; 130) einen fünften Abschnitt (35) mit zylindrischem Querschnitt aufweist, angeordnet stromabwärts bezüglich des vierten kegelstumpfförmigen Abschnitts (34), um das Fluid ($F_{out}$) auszuleiten.

**6.** Vorrichtung nach einem der vorhergehenden Ansprüche, **dadurch gekennzeichnet, dass** die Nachweiseinrichtung (50) mittels eines stromaufwärtigen Rohrs (51) mit der stromaufwärtigen Kammer (20) und mittels eines stromabwärtigen Rohrs (52) mit dem zentralen zylindrischen Abschnitt (33) des rohrförmigen Elements (30; 130) verbunden ist.

**7.** Vorrichtung nach einem der vorhergehenden Ansprüche, **dadurch gekennzeichnet, dass** die Messvorrichtung eine Skala (53) aufweist, die den Wert der ermittelten Druckdifferenz ($\Delta p$) anzeigt.

**8.** Vorrichtung nach einem der Ansprüche 1 bis 7, **dadurch gekennzeichnet, dass** sie aufweist:
ein rohrförmiges Element (10), welches sich in einer Längsrichtung (X-X) der Fluidströmung von stromaufwärts nach stromabwärts erstreckt, das eine gegebene Gesamtlänge (L) besitzt und entlang der Längsrichtung (X-X) in zwei Abschnitte (20, 30) jeweiliger Länge ($L_0$, $L_1$) unterteilt ist, angeordnet relativ zueinander in Reihe von stromaufwärts nach stromabwärts in Richtung des Fluidstroms, und entsprechend umfassend:

eine erste Kammer (20) eines gegebenen Innendurchmessers ($d_{20}$), die sich in der Längsrichtung (X-X) zwischen einer stromaufwärtigen Öffnung (21a) und einer stromabwärtigen Öffnung (21b) erstreckt, wobei das Rückschlagventil (40) koaxial in die erste Kammer (20) eingefügt ist;

eine zweite Kammer (30), die von stromaufwärts nach stromabwärts mindestens drei Abschnitte (32, 33, 34) variierenden Querschnitts aufweist, die zusammen so ausgestaltet sind, dass sie ein Venturi-Rohr simulieren.

9. Vorrichtung nach dem vorhergehenden Anspruch, **dadurch gekennzeichnet, dass** das Rückschlagventil (40) einen im wesentlichen zylindrischen Körper (41) mit einem derartigen Außendurchmesser ($d_{40}$) aufweist, dass es sich koaxial in das Innere der Kammer (20) einsetzen lässt.


## Revendications

1. Instrument de mesure du débit d'un fluide ($F_{in}$, $F_{out}$) s'écoulant à l'intérieur d'une canalisation de l'amont vers l'aval dans une direction longitudinale d'écoulement (X-X), comprenant :

   - un clapet anti-retour (40 ; 140) et un élément tubulaire (30 ; 130) simulant, en utilisation, un tube de Venturi, ledit clapet et ledit élément étant raccordés l'un à l'autre coaxialement, respectivement, de l'amont vers l'aval dans la direction longitudinale (X-X) d'écoulement du fluide ;
   - un dispositif (50) conçu pour détecter une différence de pression ($\Delta p$) qui se produit entre l'intérieur d'une première chambre (20) et l'intérieur d'une partie cylindrique centrale (33) de l'élément tubulaire (30 ; 130), **caractérisé en ce que** ladite première chambre (20) est une chambre située en amont du clapet anti-retour (40 ; 140) et communiquant avec ce dernier.

2. Instrument selon la revendication 1, **caractérisé en ce que** ledit clapet anti-retour (40 ; 140) comprend un corps sensiblement cylindrique (41 ; 141) de diamètre extérieur approprié pourvu d'une ouverture amont (41a), en communication avec ladite première chambre amont (20 ; 120), et une ouverture aval (41b), un élément de fermeture (43) étant introduit à l'intérieur du clapet et pouvant être déplacé dans les deux sens de la direction longitudinale (X-X) sous l'action de poussée du fluide ou, dans le sens contraire, l'action de poussée d'un ressort (44) .

3. Instrument selon la revendication 1 ou 2, **caractérisé en ce que** ledit élément tubulaire (30 ; 130) comprend au moins :

   - une deuxième partie ayant une forme tronconique (32) dont la base plus grande est située en amont et la base plus petite est située en aval,
   - une troisième partie cylindrique centrale (33) ayant une section transversale correspondant sensiblement à celle de la base plus petite de la deuxième partie tronconique (31),
   - une quatrième partie (34) ayant une section transversale tronconique dont la base plus grande est située en aval, lesdites parties étant disposées en série dans la direction longitudinale (X-X).

4. Instrument selon la revendication 3, **caractérisé en ce que** ledit élément tubulaire (30 ; 130) comprend :

   - une première partie cylindrique (310) ayant une section transversale donnée, disposée en amont de ladite deuxième partie tronconique (32).

5. Instrument selon la revendication 3 ou 4, **caractérisé en ce que** ledit élément tubulaire (30 ; 130) comprend une cinquième partie (35) ayant une section transversale cylindrique, disposée en aval de ladite quatrième partie tronconique (34), destinée à décharger le fluide ($F_{out}$).

6. Instrument selon l'une quelconque des revendications précédentes, **caractérisé en ce que** ledit dispositif de détection (50) est raccordé au moyen d'une canalisation amont (51) à la chambre amont (20) et au moyen d'une canalisation aval (52) à ladite partie cylindrique centrale (33) de l'élément tubulaire (30 ; 130).

7. Instrument selon l'une quelconque des revendications précédentes, **caractérisé en ce que** ledit dispositif de mesure comprend un cadran (53) montrant la valeur de la différence de pression ($\Delta p$) détectée.

8. Instrument selon l'une quelconque des revendications 1 à 7, **caractérisé en ce qu'**il comprend :

   - un élément tubulaire (10) s'étendant dans une direction longitudinale (X-X) d'écoulement du fluide de l'amont vers l'aval, ayant une longueur hors tout donnée (L) et étant divisé dans la direction longitudinale (X-X) en deux parties (20, 30) de longueur respective ($L_0$, $L_1$) disposées en série l'une par rapport à l'autre de l'amont vers l'aval dans la direction d'écoulement du fluide et comprenant respectivement :

      • une première chambre (20) de diamètre intérieur donné ($d_{20}$) s'étendant dans la direction longitudinale (X-X) entre une ouverture amont (21a) et une ouverture aval (21b) ; le clapet anti-retour (40) étant introduit coaxialement dans la première chambre (20) ;

• une seconde chambre (30) qui comprend, de l'amont vers l'aval, au moins trois parties (32, 33, 34) de section transversale qui varie qui sont conçues conjointement pour simuler un tube de Venturi.

9. Instrument selon la revendication précédente, **caractérisé en ce que** ledit clapet anti-retour (40) comprend un corps sensiblement cylindrique (41) ayant un diamètre extérieur ($d_{40}$) tel qu'il peut être introduit coaxialement à l'intérieur de la chambre (20).

Fig. 1

Fig. 2

*Fig. 3*

*Fig. 4a*

*Fig. 4b*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP O593164 A1
- US 2002101355 A1

- EP 1835209 A